# EUROPEAN PATENT SPECIFICATION

(11) **EP 3 715 058 B1**
(45) Date of publication and mention of the grant of the patent: **11.09.2024**
(21) Application number: 18880531.1
(22) Date of filing: 22.11.2018
(51) Int. Cl.: B25J 5/00, B25J 19/00, B25J 17/00, B62D 57/032

(54) **KNEE STRUCTURE FOR ROBOT**
KNIESTRUKTUR FÜR ROBOTER
STRUCTURE DE GENOU POUR ROBOT

(30) Priority: 24.11.2017 JP 2017226357
(43) Date of publication of application: 30.09.2020
(73) Proprietor: Kawasaki Jukogyo Kabushiki Kaisha, Kobe-shi, Hyogo 650-8670 (JP)
(72) Inventor: KAMON Masayuki, Kobe-shi, Hyogo 650-8670 (JP); KITANI Kenji, Kobe-shi, Hyogo 650-8670 (JP); SUZUKI Miu, Kobe-shi, Hyogo 650-8670 (JP)
(74) Representative: Müller-Boré & Partner Patentanwälte PartG mbB
(86) International application number: PCT/JP2018/043182
(87) International publication number: WO 2019/103100

(56) References cited:
- JP-A- 2001 198 864
- JP-A- 2001 287 177
- JP-A- 2003 145 477
- JP-A- 2005 192 764
- JP-A- 2006 088 258
- JP-A- 2006 297 554
- JP-A- 2008 067 762
- JP-A- 2010 076 011
- JP-A- 2010 142 353
- JP-A- 2013 119 136
- US-A1- 2004 255 711

## Description

### TECHNICAL FIELD

The present invention relates to a knee structure of a robot in which auxiliary torque is applied to knees when a robot resumes to an upright state from a state where the knees are bent.

### BACKGROUND ART

Conventionally, biped walking or two-legged robots have been developed. Since such a robot is capable of performing works similar to those which are performed by a human, it is expected to work at places into which a human is difficult to enter, such as removal of rubbles and lifesaving when a disaster occurs.

When resuming such a robot from a state where knees are bent to an upright state where the knees are straight, large torques are needed in the knee joints. Therefore, a configuration is proposed in which elastic bodies are disposed in the knee joints, and restoring forces of the elastic bodies are used when resuming the upright state from the knee-bent state.

Patent Document 1 discloses a legged robot in which elastic bodies are disposed in knee joints. In the legged robot of Patent Document 1, springs are attached to the knee joints, and when resuming the upright state from the knee-bent state, the restoring forces of the springs are used. Patent Document 1 also discloses a configuration in which, when a large restoring force is needed, the spring attached to the knee is pulled to increase the restoring force.

Patent Document 2, which forms the basis for the preamble of claim 1, discloses an auxiliary torque generator and an auxiliary torque control method for a joint of a walking robot.

Patent Document 3 discloses a further leg joint assist device for a leg type movable robot.

### [Reference Document of Conventional Art]

### [Patent Document]

[Patent Document 1] JP2001-287177A
[Patent Document 2] JP2010-076011A
[Patent Document 3] US2004/255711A1

### DESCRIPTION

### [Problem to be Solved]

In the legged robot disclosed in Patent Document 1, the spring is attached to the knee joint so that it is pulled according to bending of the knee. Thus, when the robot bends the knees, the springs are pulled according to bending of the knees. However, since the spring attached to the knee is pulled each time the knee is bent, both a torque for bending the knee and a torque for pulling the spring are needed even when the knee is to be bent small. Therefore, even when bending the knee deeply or bending the knee shallowly, the torque needed for bending the knee each time the knee is bent becomes larger and, thus, electric power consumed for bending the knee increases. Since the power consumption of a humanoid robot becomes larger, the operation cost increases accordingly.

Therefore, the present invention is made in view of the above situation, and one purpose thereof is to provide a knee structure of a robot in which a torque needed for bending a knee is kept small, when bending the knee shallowly.

### [Summary]

A knee structure of a robot according to the invention is defined in claim 1.

According to the invention, since the restoring force applying member is configured to be attached to the thigh and the lower leg so as to be across the thigh and the lower leg with the slack, the restoring force applying member is pulled only when the leg is bent deeply somewhat. Therefore, a tensile force is not applied to the restoring force applying member when the leg is bent shallowly and, thus, a torque needed for bending the leg can be small. Further, when the leg is in a state where it is bent deeply so that the restoring force applying member is stretched, the restoring force is given to the thigh and the lower leg by the restoring force applying member and, thus, the torque is given auxiliary to the thigh and the lower leg.

Moreover, the restoring force applying member may be made of rubber and is formed in a belt-like shape.

Since the restoring force applying member is made of the belt-like rubber, the restoring force applying member easily extends and contracts so that the restoring force can suitably be given to the thigh and the lower leg.

Moreover, the restoring force applying member is attached so as to close a gap between the thigh and the lower leg, the gap being produced when the leg is bent.

Since the restoring force applying member is attached so as to close a gap between the thigh and the lower leg which is produced when the leg is bent, it can prevent that an object enters into the gap between the thigh and the lower leg.

Moreover, the restoring force applying member may be attached so as to pass through a position on a projecting side of the knee joint when the leg is bent from a state where the leg stands straight.

Since the restoring force applying member is attached so as to pass through the position on the projecting side when the leg is bent from the state where the leg stands straight, the restoring force applying member is stretched when the leg is bent deeply, whereas the restoring force applying member contracts or shrinks when the leg makes the degree of bending shallower. Therefore, when the leg makes the degree of bending shallower from the state where the leg is bent deeply, the restoring force applying member can efficiently give the restoring force to the thigh and the lower leg.

Moreover, the knee structure may include a part to be compressed, attached to either one of the thigh and the lower leg, at a position on the opposite side of the projecting side of the knee joint when the leg is bent from a state where the leg stands straight, and configured to generate a restoring force by being pinched and compressed between the thigh and the lower leg, when the leg reaches a bending angle more than a given angle.

Since the restoring force by the part to be compressed is given to the thigh and the lower leg, the restoring force can be given to the thigh and the lower leg at the position separated from the restoring force applying member. Therefore, the restoring force can be given to the thigh and the lower leg complexly from the restoring force applying member and the part to be compressed, that is, a large restoring force can be given to the thigh and the lower leg. Further, since the restoring force by the part to be compressed is generated when the leg reaches the bending angle more than the given angle, the part to be compressed is not compressed in a case where the leg is bent shallowly, and it can avoid that the torque for compression of the part to be compressed is to be used.

### [Effect]

According to the present invention, only when the leg is bent deeply which needs comparatively large torque, the restoring force applying member gives the restoring force to the thigh and the lower leg. That is, the restoring force applying member can give the restoring force to the thigh and the lower leg only when necessary. When the leg is bent shallowly, the tensile force is not applied to the restoring force applying member so that the leg can be bent with small torque. Therefore, consumed electric power can be kept small and the operation cost of the robot can be kept low.

### BRIEF DESCRIPTION OF DRAWINGS

Fig. 1(a) is a front view of a humanoid robot, and Fig. 1(b) is a side view of the humanoid robot of Fig. 1(a).
Fig. 2 is a block diagram illustrating a configuration of a control system of the humanoid robot of Figs. 1(a) and (b).
Fig. 3 is a partial cross-sectional view illustrating the inside of a knee structure in which a cover of a knee joint in the humanoid robot of Figs. 1(a) and (b) and a cover of a lower leg are partially cut off.
Fig. 4 is a perspective view of the knee structure in the humanoid robot of Figs. 1(a) and (b) in a state where the cover of the knee joint is removed and the knee is bent.
Figs. 5(a) to (e) are side views illustrating a leg at respective processes when bending the leg in the humanoid robot of Figs. 1(a) and (b) from an upright state, and then resuming the upright state.
Figs. 6(a) to (c) are side views illustrating the leg at respective processes when bending the leg in the humanoid robot of Figs. 1(a) and (b) from the upright state, where a cover is removed to illustrate an internal structure.
Fig. 7(a) is a perspective view of a knee structure in a humanoid robot according to the present invention in a state where a cover of a knee joint is removed and the knee is bent, and Fig. 7(b) is a plan view of the knee structure of Fig. 7(a).

### MODES FOR CARRYING OUT THE INVENTION

Hereinafter, knee structures of robots according to embodiments of the present invention are described with reference to the accompanying drawings.

### (Example)

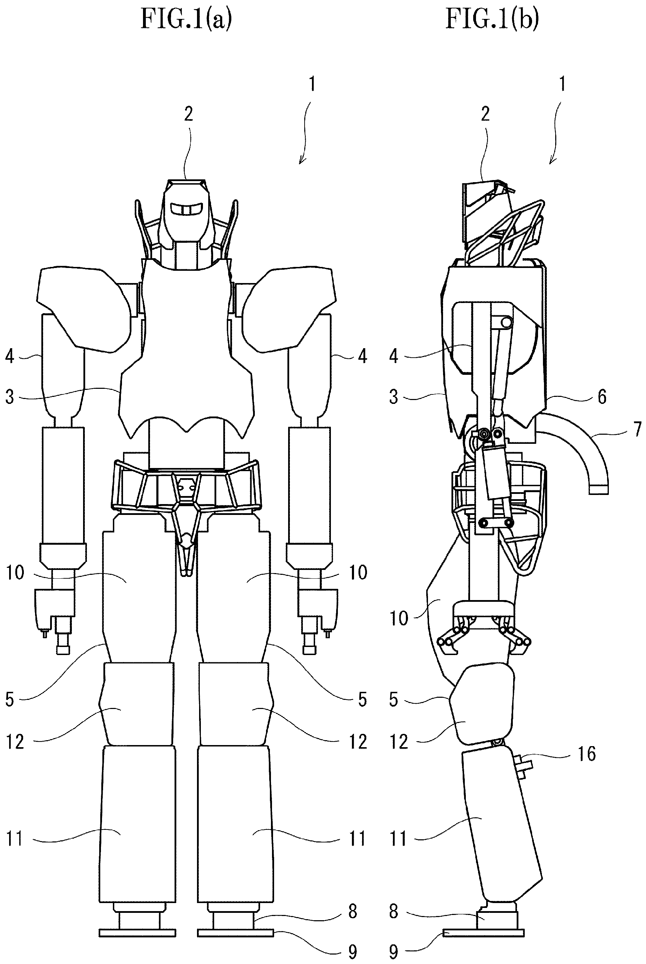

First, an example of a knee structure of a robot not according to the present invention is described. Fig. 1(a) is a front view of a humanoid robot, and Fig. 1(b) is a side view of the humanoid robot.

The humanoid robot 1 has an imitated human shape, and includes a head 2, a body (trunk or torso) 3, arms 4, and legs 5. The humanoid robot 1 controls driving of the legs 5 to perform two-legged walking. Note that, by driving the arms 4 and the legs 5 to move the hands and feet, works similar to those which are performed by a human can be performed.

The arm 4, the leg 5, etc. are comprised by connecting a plurality of links through joints. Between the links, it is configured to be bendable at the joints. A drive unit, such as a servomotor or an actuator, is disposed at each joint. By controlling the driving of the drive unit, a degree of bending between the links is controlled and the driving of the arms 4, the legs 5, etc. is controlled. A plurality of drive units are provided corresponding to the plurality of bendable joints provided to the humanoid robot 1.

A cable 7 is connected to a rear surface part 6 of the body 3 in the humanoid robot 1. The cable 7 is made of a flexible material, and therefore, it is configured to be bendable. Wiring is disposed inside the cable 7, and current from a power supply is supplied to the humanoid robot 1 through the wiring disposed inside the cable 7. In this example, the wiring from the cable 7 branches and they are connected to the plurality of servo motors. The current from the cable 7 is supplied to the servo motors through the wiring.

An ankle 8 is provided to a tip-end part of each leg 5. A foot 9 is attached to the outside of the ankle 8. The foot 9 is detachably attached to the ankle 8.

Each leg 5 has a thigh 10 and a lower thigh or lower leg 11 disposed below the thigh 10. A knee joint 12 is provided between the thigh 10 and the lower leg 11. The knee joint 12 bendably connects the thigh 10 with the lower leg 11. Here, the knee joint 12 refers to a part configured to be bendable by a hinge etc. between the thigh 10 and the lower leg 11.

In this example, the knee joint 12 is provided as a rotation axis which is rotatable between the thigh 10 and the lower leg 11, a part of the leg 5 above the knee joint 12 as the rotation axis is referred to as the thigh 10, and a part of the leg 5 below the knee joint 12 as the rotation axis is referred to as the lower leg 11.

A compression spring (part to be compressed) 16 is attached to the rear side of the lower leg 11 in the leg 5. That is, the compression spring 16 is attached to a position of the lower leg 11 on the opposite side (rear side) from a projecting side (front side) than the knee joint 12 when bending the leg 5 from an upright state.

The compression spring 16 is attached to a position at which it is pinched and compressed between the thigh 10 and the lower leg 11 when the leg 5 is bent. Moreover, the compression spring 16 is attached to a position at which it is not compressed when the leg 5 stands straight and it is compressed when the leg 5 is bent. In this example, particularly, the compression spring 16 is attached to a position at which it is pinched and compressed between the thigh 10 and the lower leg 11 only when the leg 5 becomes a bending angle more than a given angle. Here, the bending angle more than the given angle refers to a bending angle at which the compression spring 16 contacts the thigh 10 or the lower leg 11 as a result of bending the leg 5 deeply. When the bending angle becomes more than the given angle, the compression spring 16 is pinched between the thigh 10 and the lower leg 11 to generate a restoring force thereat.

Note that, in this example, although the compression spring 16 is attached to the lower leg 11, the present invention is not limited to this configuration. The compression spring 16 may be attached to the thigh 10 as long as it is attached to either the thigh 10 or the lower leg 11.

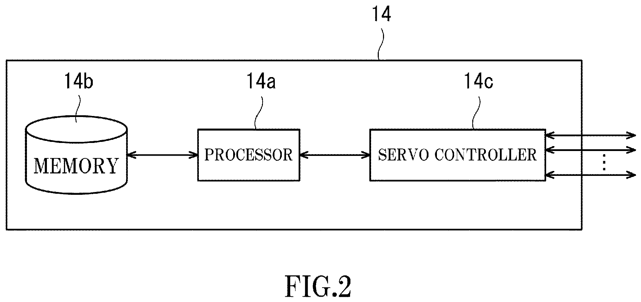

Next, a control configuration of the humanoid robot 1 is described. Fig. 2 illustrates a block diagram of the control configuration in the humanoid robot 1.

As illustrated in Fig. 2, a control part 14 in the humanoid robot 1 includes a processor 14a, a memory 14b, and a servo controller 14c.

For example, the control part 14 is a robot controller provided with a computer, such as a microcontroller. Note that the control part 14 may be comprised of a sole control part 14 which carries out a centralized control, or may be comprised of a plurality of control parts 14 which collaboratively carry out a distributed control.

The memory 14b stores information on a basic program as a robot controller, various fixed data, etc. The processor 14a controls various operations of a body part 100 by reading and executing software, such as the basic program stored in the memory 14b. That is, the processor 14a generates a control command of the body part 100, and outputs it to the servo controller 14c. For example, the processor 14a is comprised of a processor unit.

The servo controller 14c is configured to control the driving of the drive units corresponding to the respective joints of the humanoid robot 1 based on the control commands generated by the processor 14a.

Next, the knee structure of the humanoid robot 1 is described.

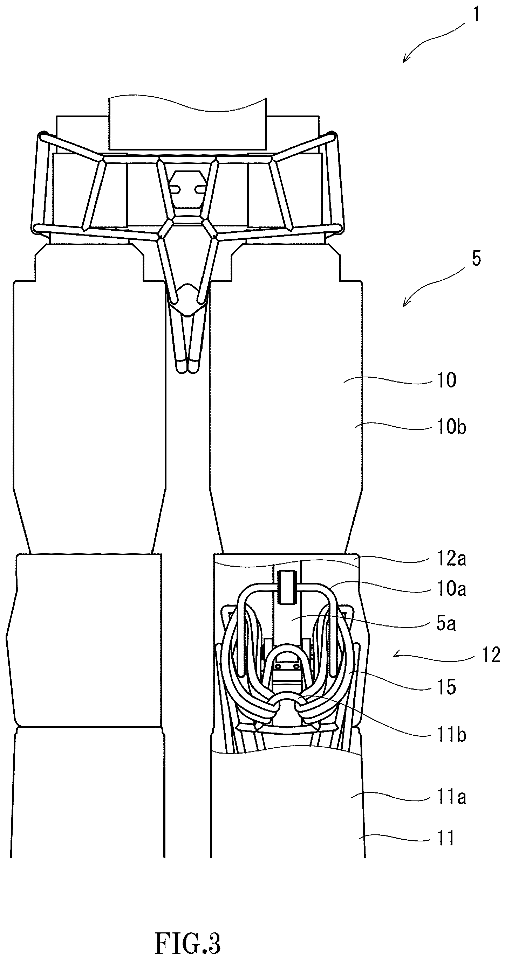

Fig. 3 illustrates a partial cross-sectional view illustrating the inside of the knee structure in which a cover 12a of the knee joint 12 and a cover 11a of the lower leg 11 are partially cut off. Fig. 3 illustrates a state where the legs 5 stand straight.

As illustrated in Fig. 3, a rubber member 15 is provided to the knee joint 12 as a restoring force applying member between a part of the thigh 10 in the leg 5 and a part of the lower leg 11 in the leg 5. An elastic body is used as the restoring force applying member, and in this example, the rubber member 15 is used. The rubber member 15 is made of rubber, and in this example, the rubber member 15 is comprised of a bundle of rubber tubes. As illustrated in Fig. 3, the rubber member 15 may be constituted as a bundle of rubber member 15 in which a plurality of stacked rubber tubes are attached, or may be constituted as a bundle of rubber member 15 in which a single rubber tube is folded and stacked a plurality of times.

The rubber member 15 is attached to an upper rubber member supporting part 10a which extends downwardly from the thigh 10, at a position above the knee joint 12. Moreover, the rubber member 15 is attached to a lower rubber member supporting part 11b which is provided to an upper end of the lower leg 11, at a position below the knee joint 12. That is, the rubber member 15 is provided so as to bridge between the upper rubber member supporting part 10a of the thigh 10 and the lower rubber member supporting part 11b of the lower leg 11.

In this example, the upper rubber member supporting part 10a of the thigh 10 and the lower rubber member supporting part 11b of the lower leg 11 have a pipe shape. The rubber member 15 constituted by the rubber tube is wound around the pipe-like upper rubber member supporting part 10a and lower rubber member supporting part 11b at respective positions so that it is provided to bridge between the upper rubber member supporting part 10a and the lower rubber member supporting part 11b.

The rubber member 15 is attached across the thigh 10 and the lower leg 11 in a state where it is slack when the leg 5 stands straight. A support 5a of the leg 5 extends in the vertical direction and is disposed rearward of the rubber member 15. In this example, the knee joint 12 is a bendable part of the support 5a.

Next, the knee structure in the humanoid robot 1 when bending the knee is described.

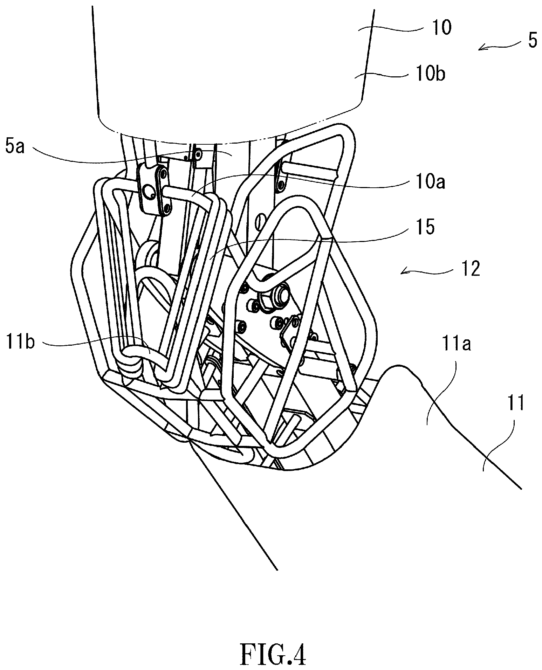

Fig. 4 illustrates the knee structure in a state where the knee of the leg 5 is bent. Fig. 4 is a perspective view of the knee structure in a state where the cover 12a of the knee joint 12 is removed and the knee is bent.

As illustrated in Fig. 4, the rubber member 15 passes through a position forward of the knee joint 12 and is provided between the thigh 10 and the lower leg 11. Thus, the rubber member 15 is attached so as to pass through a position forward of the knee joint 12 which projects from the upright state when the leg 5 is bent.

When the knee of the leg 5 is bent, a distance between the upper rubber member supporting part 10a of the thigh 10 and the lower rubber member supporting part 11b of the lower leg 11 becomes longer. Thus, the rubber member 15 provided so as to bridge between the upper rubber member supporting part 10a and the lower rubber member supporting part 11b is pulled in the vertical direction.

Since the rubber member 15 is attached in the state where it is slack when the leg 5 stands straight, the rubber member 15 itself is not stretched in a state where the knee is bent shallowly, but only the slack part is stretched or tightened (eliminating the slackness).

When the knee is bent somewhat deeply, the rubber member 15 is further pulled from the state where the slack part of the rubber member 15 is stretched or tightened, and therefore, the rubber member 15 itself is then stretched. When the rubber member 15 is stretched, it produces a restoring force in a direction of contracting or shrinking the rubber member 15.

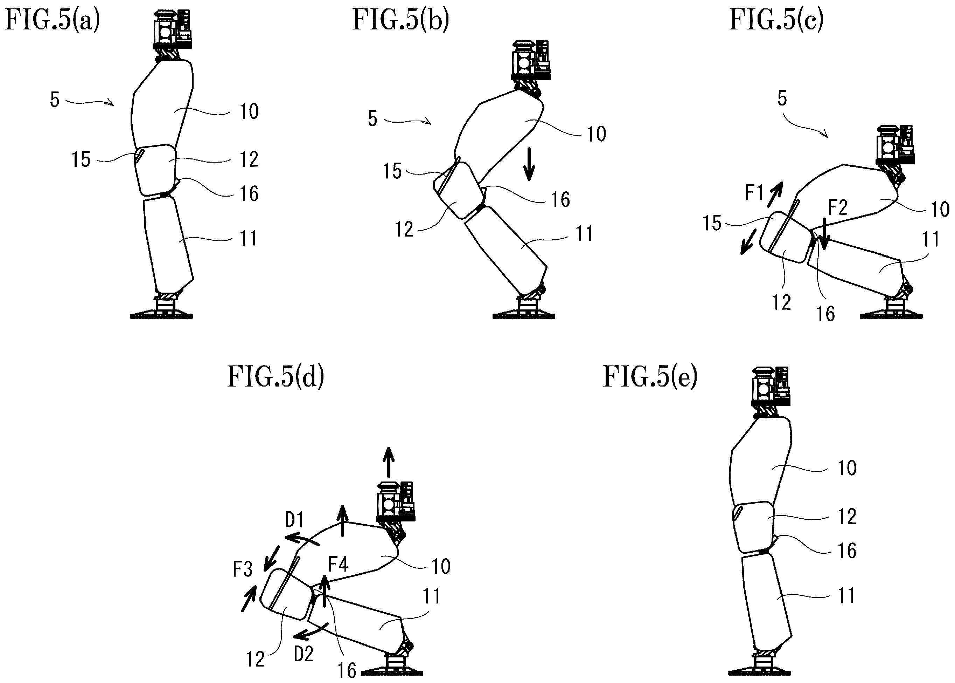

Figs. 5(a) to (e) illustrate side views of the leg 5 for respective states from the humanoid robot bending the knee until the robot resuming the upright state of the knee.

Fig. 5(a) illustrates a side view of the leg 5 in a state where it stands straight. Since the leg 5 is in the state where it stands straight (upright state), the rubber member 15 is disposed in the slack state so as to bridge between the upper rubber member supporting part 10a and the lower rubber member supporting part 11b.

Fig. 5(b) illustrates a side view of the leg 5 in a state where it is bent shallowly. When the leg 5 is bent shallowly, the rubber member 15 becomes in the state where the slack part is stretched or tightened. In the state of Fig. 5(b), the rubber member 15 itself is not stretched, but only the slack part of the rubber member 15 is stretched or tightened. That is, the length of the rubber member 15 illustrated in Fig. 5(b) is a natural length of the rubber member 15.

Fig. 5(c) illustrates a side view of the leg 5 in a state where it is bent deeply. When the knee is further bent deeply from the state illustrated in Fig. 5(b), a tensile force F1 further acts on the stretched rubber member 15. Thus, the rubber member 15 is further pulled, and therefore, the rubber member 15 itself is stretched.

Further, when the leg 5 is bent deeply, the compression spring 16 is compressed. The compression spring 16 is attached to a position at which it is not compressed in the upright state of the leg 5, but it is compressed when the leg 5 is bent. In this example, particularly, the compression spring 16 is attached to a position at which it is compressed for the first time when the leg 5 is bent somewhat deeply and the bending angle of the leg 5 becomes more than a certain angle. When the leg 5 is bent deeply, the compression spring 16 is compressed by being pinched between the thigh 10 and the lower leg 11. Therefore, a compressive force F2 acts on the compression spring 16.

Fig. 5(d) illustrates a side view of the leg 5 in a state where it again stands straight from the deeply-bent state of the leg 5. In the state illustrated in Fig. 5(d), since the leg 5 is bent deeply, the rubber member 15 is in the state where it is pulled. Since the rubber member 15 is in the already-pulled state, the rubber member 15 has a restoring force F3 for contracting or shrinking from the state. That is, when the leg 5 is in the state where it is bent deeply so that the rubber member 15 is stretched, the restoring force F3 of the rubber member 15 is given to the thigh 10 and the lower leg 11. When the leg 5 stands straight, this restoring force F3 of the rubber member 15 is used auxiliary. By the rubber member 15 causing the restoring force F3 to act on the thigh 10 and the lower leg 11, torque which rotates the thigh 10 in a D1 direction centering on the knee joint 12 occurs. Moreover, torque which rotates the lower leg 11 in a D2 direction centering on the knee joint 12 occurs. Thus, when the leg 5 resumes the upright state from the state where it is bent deeply, the restoring force F3 caused by the rubber member 15 is given to the thigh 10 and the lower leg 11.

Note that although in this example the restoring force F3 caused by the rubber member 15 is given to the thigh 10 and the lower leg 11 when the leg 5 resumes the upright state from the state where it is bent deeply, the present invention is not limited to this example. When the leg 5 makes the degree of bending shallower from the state where the leg 5 is bent deeply and the rubber member 15 is stretched, the restoring force F3 may be given to the thigh 10 and the lower leg 11. Even if the leg 5 does not resumes the upright state, but it just makes the bending angle shallower, the restoring force F3 caused by the rubber member 15 may also be given to the thigh 10 and the lower leg 11.

In the state illustrated in Fig. 5(d), since the leg 5 is bent deeply, the compression spring 16 is in the compressed state. In Fig. 5(d), since the compression spring 16 is in the already-compressed state, the compression spring 16 has a restoring force F4 for extending from this state. When the leg 5 resumes the upright state, this restoring force F4 of the compression spring 16 is used auxiliary. By the compression spring 16 causing the restoring force F4 to act on the thigh 10 and the lower leg 11, the torque which rotates the thigh 10 in the D1 direction centering on the knee joint 12 and the torque which rotates the lower leg 11 in the D2 direction centering on the knee joint 12 occur. That is, when resuming the upright state from the state where the leg 5 is bent, the restoring force F4 caused by the compression spring 16 is given to between the thigh 10 and the lower leg 11.

Note that although in this example the restoring force F4 caused by the compression spring 16 is given to the thigh 10 and the lower leg 11 when the leg 5 resumes the upright state from the state where it is bent deeply, the present invention is not limited to this example. When the leg 5 makes the degree of bending shallower from the deeply-bent state where the compression spring 16 is compressed, the restoring force F4 caused by the compression spring 16 may be given to the thigh 10 and the lower leg 11. Even if the leg 5 does not resume the upright state, but it just makes the bending angle shallower, the restoring force F4 caused by the compression spring 16 may also be given to the thigh 10 and the lower leg 11.

By making the bending angle of the leg 5 gradually shallower, while auxiliary using the restoring force F3 caused by the rubber member 15 and the restoring force F4 caused by the compression spring 16, the leg 5 resumes the upright state.

Fig. 5(e) illustrates a side view of the leg 5 in a state where the leg 5 again stands straight. From the state illustrated in Fig. 5(d), the thigh 10 rotates in the D1 direction centering on the knee joint 12 and the lower leg 11 rotates in the D2 direction centering on the knee joint 12, the leg 5 approaches the upright state. When the leg 5 becomes straight, the leg 5 stands straight.

The torque needed for driving the knee joint 12 when resuming the knee joint 12 to the upright state from the bent state becomes larger as the bent angle increases.

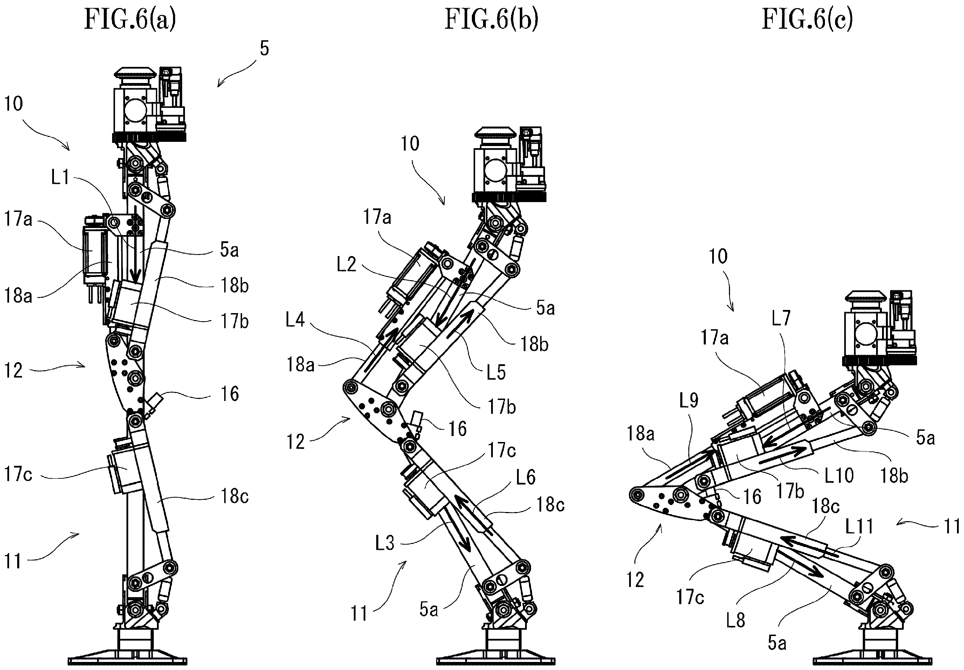

Figs. 6(a) to (c) illustrate a structure inside the cover of the leg 5. Figs. 6(a) to (c) are side views of the leg 5 in a state where the cover is removed.

Fig. 6(a) illustrates an internal structure of the leg 5 in the state where it stands straight. As illustrated in Fig. 6(a), the leg 5 is provided with a plurality of actuators 17. In this example, three actuators 17 are attached to each leg 5.

In Figs. 6(a) to (c), the actuator attached to the front side of the thigh 10 is an actuator 17a, the actuator attached to the rear side of the thigh 10 is an actuator 17b, and the actuator attached to the lower leg 11 is an actuator 17c.

By activating the actuators 17 to change lengths of respective links 18 connected to the corresponding actuators 17, the bending angle of the knee joint 12 can be changed.

In this example, the link connected to the actuator 17a is a link 18a, the link connected to the actuator 17b is a link 18b, and the link connected to the actuator 17c is a link 18c.

In the state where the leg 5 stands straight, a load L1 is applied to the support 5a from the body. Therefore, the support 5a in the upright state supports the load L1 from the body.

Fig. 6(b) illustrates the internal structure of the leg 5 in the state where the leg 5 bends the knee joint 12 shallowly.

In the state where the leg 5 is bent, a load L2 from the body is supported by the support 5a, the link 18a, and the link 18b. In order to support the load L2 from the body, a load L4 acts on the actuator 17a, and a load L5 acts on the actuator 17b. Moreover, in order to support a load L3 from the body, a load L6 acts on the actuator 17c. In order for the leg 5 to maintain the posture and to maintain the bending angle of the knee joint 12, a load corresponding to the load L4 is applied to the actuator 17a, a load corresponding to the load L5 is applied to the actuator 17b, and a load corresponding to the load L6 is applied to the actuator 17c.

Fig. 6(c) illustrates the internal structure of the leg 5 in the state where the leg 5 bends the knee joint 12 deeply.

In the deeply-bent state, the leg 5 supports a load L7 from the body by the support 5a, the link 18a, and the link 18b. In order to support the load L7 from the body, a load L9 acts on the actuator 17a, and a load L10 acts on the actuator 17b. Moreover, in order to support a load L8 from the body, a load L11 acts on the actuator 17c.

In order to support the load L7 from the body, the load L9 acts on the actuator 17a, and the load L10 acts on the actuator 17b. Moreover, in order to support the load L8 from the body, the load L11 acts on the actuator 17c. In order for the leg 5 to maintain the posture and to maintain the bending angle of the knee joint 12, a load corresponding to the load L9 is applied to the actuator 17a, a load corresponding to the load L10 is applied to the actuator 17b, and a load corresponding to the load L11 is applied to the actuator 17c.

At this time, the support 5a cannot support a load component which acts in the front-and-rear direction of the humanoid robot 1. The load L9 of the actuator 17a in Fig. 6(c) becomes larger than the load L4 of the actuator 17a in Fig. 6(b). Moreover, the load L10 of the actuator 17b in Fig. 6(c) becomes larger than the load L5 of the actuator 17b in Fig. 6(b). Moreover, the load L11 of the actuator 17c in Fig. 6(c) becomes larger than the load L6 of the actuator 17c in Fig. 6(b). The load of the actuator 17 becomes larger as the bending angle of the leg 5 becomes deeper. Therefore, in order to maintain the bending angle of the leg 5 and to maintain the posture of the leg 5, the load which acts on the actuator 17 becomes larger as the bending angle of the leg 5 becomes deeper.

Moreover, when driving the leg 5 in order to resume the leg 5 to the upright state from the bent posture, it is necessary to make the torque exceeding the load for maintaining the posture of the leg 5 act on each actuator 17. Therefore, in the deeply-bent state of the leg 5, a large torque is needed for each actuator 17 to resume the leg 5 to the upright state from the bent posture.

As illustrated in Fig. 5(d), in this example, when resuming the leg 5 to the upright state from the deeply-bent state, the knee joint 12 of the leg 5 can be driven by driving the actuator 17 while auxiliary using the restoring force F3 caused by the rubber member 15 and the restoring force F4 caused by the compression spring 16. Therefore, the required driving force of each actuator 17 can be reduced.

Moreover, in this example, since the rubber member 15 is attached so as to be slack, the tensile force acts on the rubber member 15 for the first time when the leg 5 is bent deeply as illustrated in Fig. 5(c), and from this state, the restoring force F3 acts on the rubber member 15 when the leg 5 resumes the upright state, as illustrated in Fig. 5(d). Therefore, only when the leg 5 resumes the upright state from the deeply-bent state, the restoring force F3 caused by the rubber member 15 can be used auxiliary. That is, the restoring force F3 caused by the rubber member 15 can be used auxiliary, only when the large load is applied and the large driving force caused by the actuator 17 is needed.

On the other hand, as illustrated in Fig. 5(b), in the state where the leg 5 is bent shallowly, the rubber member 15 itself is not stretched, but only the slack part of the rubber member 15 is stretched or tightened. Therefore, the rubber member 15 itself is not stretched only by bending the leg 5 shallowly. That is, when bending the leg 5 shallowly, torque for generating the tensile force in the rubber member 15 is not needed. Therefore, when bending the leg 5 shallowly, the driving force of the actuator 17 needed for bending the leg 5 can be kept small. Since the driving force caused by the actuator 17 can be kept small, the electric power consumed by the humanoid robot 1 can be kept small. Therefore, the operation cost of the humanoid robot 1 can be kept low.

Moreover, by thus attaching the rubber member 15 with the slack, the restoring force F3 caused by the rubber member 15 is used auxiliary, only when resuming the leg 5 to the upright state from the deeply-bent state. Therefore, the humanoid robot 1 in which the restoring force F3 caused by the rubber member 15 is used only when resuming the leg 5 to the upright state from the deeply-bent state can be provided with the simple configuration. Moreover, the configuration for causing the rubber member 15 to selectively generate the restoring force F3 only when needed can be provided, without using a special drive unit. Thus, since the configuration for causing the rubber member 15 to selectively generate the restoring force can be provided with the simple configuration, the manufacture cost of the humanoid robot 1 can be kept low.

Moreover, in this example, the compression spring 16 is attached to the position at which it is pinched and compressed between the thigh 10 and the lower leg 11 for the first time when the leg 5 is bent deeply. Therefore, as illustrated in Fig. 5(c), the compression spring 16 is compressed for the first time when the leg 5 is bent deeply, and, as illustrated in Fig. 5(d), from this state, the compression spring 16 generates the restoring force F4 when resuming the uptight state of the leg 5. Therefore, the restoring force F4 caused by the compression spring 16 can be used auxiliary, only when resuming the upright state from the deeply-bent state of the leg 5. That is, the restoring force F4 caused by the compression spring 16 can be used auxiliary, only when the large load is applied to the leg 5 and the large driving force caused by the actuator 17 is needed.

On the other hand, in the state where the leg 5 is bent shallowly as illustrated in Fig. 5(b), the compression spring 16 is neither pinched nor compressed. Therefore, the compression spring 16 is not compressed only by bending the leg 5 shallowly. Therefore, when bending the leg 5 shallowly, the torque for causing the compressive force to act on the compression spring 16 is not needed. Therefore, when bending the leg 5 shallowly, the driving force of the actuator 17 needed for bending the leg 5 can be kept small. Since the driving force caused by the actuator 17 can be kept small, the electric power consumed by the humanoid robot 1 can be kept small. Therefore, the operation cost of the humanoid robot 1 can be kept low.

Moreover, in this example, the compression spring 16 is attached rearward of the knee joint 12. That is, the compression spring 16 is attached to the position on the opposite side (rear side) from the projecting side (front side) of the knee joint 12 when bending the leg 5 from the upright state. Therefore, the compression spring 16 can be attached to the position on the opposite side of the rubber member 15. Therefore, a space inside the knee structure can be efficiently used and the leg 5 can be downsized.

Moreover, by the rubber member 15 and the compression spring 16 which are attached to the separated positions, the restoring forces can be exerted complexly on the thigh 10 and the lower leg 11. Therefore, since the different types of restoring forces can be exerted from the separated positions onto the thigh 10 and the lower leg 11, the total restoring force can be increased. Thus, the driving force of the actuator 17 needed for causing the leg 5 to stand straight can be kept small.

Note that although in this example the rubber member 15 made of rubber is constituted as the restoring force applying member, the present invention is not limited to this example. The restoring force applying member may be made of materials other than rubber. The restoring force applying member may be made of other materials, as long as it can give the restoring force to the thigh 10 and the lower leg 11 when the leg 5 resumes the upright state from the deeply-bent state.

### (Embodiment)

Next, a knee structure of the robot according to an embodiment of the present invention is described. Note that description of parts constituted similarly to the above example is omitted, and only different parts are described.

In the example, the rubber member 15 which is comprised of a plurality of stacked rubber tubes is used. On the other hand, a configuration of the embodiment differs from that of the example in that a rubber member 15a has a belt-like shape.

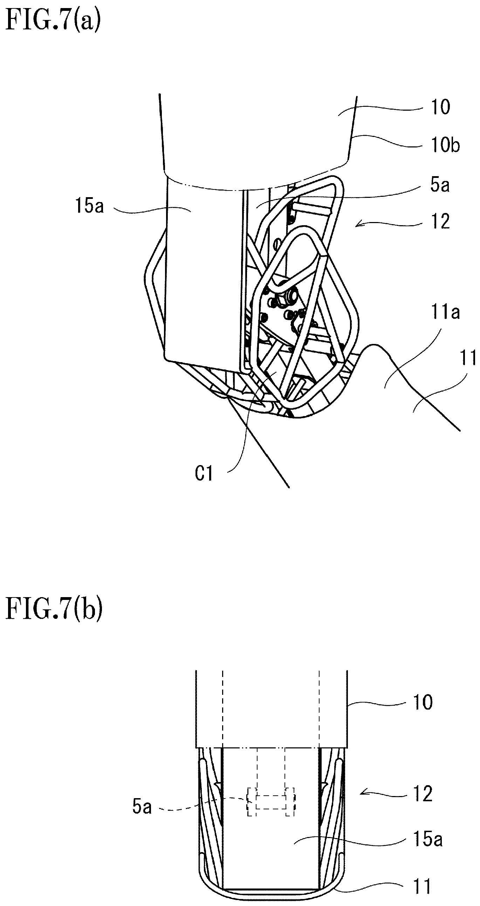

Fig. 7(a) illustrates a perspective view of the knee structure of the humanoid robot 1 according to the embodiment, and Fig. 7(b) illustrates a plan view of the knee structure of the humanoid robot 1. Figs. 7(a) and (b) illustrate the knee structure in a state where the cover 12a of the knee joint 12 is removed.

In the embodiment, the rubber member 15a which has the belt-like shape and is formed in the band-like shape is attached to the leg 5. The rubber member 15a is provided so as to bridge between the upper rubber member supporting part 10a of the thigh 10 and the lower rubber member supporting part 11b of the lower leg 11. Also in the embodiment, the rubber member 15a is attached across the thigh 10 and the lower leg 11 so as to be slack when the leg 5 stands straight.

In the embodiment, since the rubber member 15a is formed in the belt-like shape, the rubber member 15a easily extends and contracts in the extending and contracting direction of the rubber member 15a, when the leg 5 bends and stands straight. Therefore, it is easy to adjust the restoring force caused by the rubber member 15a. Therefore, the restoring force caused by the rubber member 15a can be suitably and easily given to the thigh 10 and the lower leg 11.

Moreover, since the rubber member 15a has belt-like shape, the rubber member 15a can close or cover a gap between the thigh 10 and the lower leg 11 which is produced when the leg 5 is bent.

As illustrated in the plan view of Fig. 7(b), in this embodiment, the rubber member 15a is attached so as to close or cover almost entirely the gap between the thigh 10 and the lower leg 11 which is produced when the leg 5 is bent, as the knee structure is seen in the plan view. Since the rubber member 15a is attached so as to close or cover the gap between the thigh 10 and the lower leg 11 which is produced when the leg 5 is bent, it can prevent that an object enters into the gap between the thigh 10 and the lower leg 11.

Moreover, the rubber member 15a is disposed so as to close or cover a gap inside the cover 11a of the lower leg 11. Since particularly in this embodiment the gap inside the cover 11a of the lower leg 11 can be closed or covered, it can be prevented that an object enters inside the cover 11a.

As illustrated in Fig. 7(b), when the lower leg 11 is seen in the plan view, the rubber member 15a is attached so as to close or cover almost entirely the gap inside the cover 11a of the lower leg 11.

When the knee structure is seen in the plan view, since an upper surface of the cover 11a of the lower leg 11 is closed or covered almost entirely by the rubber member 15a, and a gap C1 inside the cover 11a is closed or covered almost entirely, it can be prevented that an object falls and enters inside the gap C1. Therefore, it can be prevented that a tool or a part or component falls and enters inside the gap C1. If the humanoid robot 1 is driven while a tool or a part has fallen inside the gap C1, the tool or part which fell inside the gap C1 may contact the component(s) of the humanoid robot 1 to cause a failure. In this embodiment, since the fall of the tool or part inside the gap C1 can be prevented, the reliability of the humanoid robot 1 can be improved.

Moreover, it can be prevented that a person puts his/her finger etc. into the gap between the thigh 10 and the lower leg 11. Particularly, in this embodiment, since the gap C1 inside the cover 11a of the lower leg 11 is closed or covered, it can be prevented that the person puts the finger etc. into the gap C1. Therefore, the safety of the humanoid robot 1 can be improved.

Moreover, the rubber member 15a has both the function as the restoring force applying member which gives the restoring force and the function as a protection member which closes or covers the gap between the thigh 10 and the lower leg 11. By using the rubber member 15a, since the knee structure has the function as the restoring force applying member and the function as the protection member, the space can be efficiently used, compared with a case where members having these functions are disposed separately. Therefore, the knee structure can be downsized. Moreover, since the knee structure can be downsized, the manufacture cost of the knee structure can be kept low.

Note that the rubber member 15a may be a member which closes or covers at least a part of the gap between the thigh 10 and the lower leg 11 which is produced when the leg 5 is bent. The rubber member 15a does not need to be configured to entirely cover the gap formed between the thigh 10 and the lower leg 11.

Moreover, although in this embodiment the rubber member 15a closes or covers the upper surface of the cover 11a of the lower leg 11 almost entirely and closes or covers the gap C1 inside the cover 11a almost entirely, when the knee structure is seen in the plan view, the present invention is not limited to this embodiment. The rubber member 15a may not be configured to close or cover the gap C1 inside the cover 11a, as long as it can close or cover at least a part of the gap between the thigh 10 and the lower leg 11.

Moreover, although in this embodiment the rubber member 15a is comprised of a sheet, the present invention is not limited to this embodiment. The rubber member 15a may be comprised of a plurality of sheets. In such a case, the plurality of rubber members 15a may be wound around the knee, just like a person winds a supporter around his/her knee. Alternatively, the rubber member 15a of a sheet may be elongated, and the rubber member 15a may be wound around the knee a plurality of times.

Moreover, although in the above example and embodiment the compression spring 16 is attached to the position at which it is pinched and compressed between the thigh 10 and the lower leg 11 when the leg 5 is bent, the present invention is not limited to these example and/or embodiment. It may not be a spring but may be other things which are pinched and compressed between the thigh 10 and the lower leg 11 when the leg 5 is bent. Other things may be used as long as that, upon the leg 5 is bent deeply and other things are compressed and the leg 5 then stands straight, the restoring force is auxiliary used as the torque when the leg stands straight. For example, a member made of rubber may be disposed.

Moreover, although in the above example and embodiment, the configuration in which the compression spring 16 is attached is described, the present invention is not limited to these example and/or embodiment. The compression spring 16 may not be attached. When resuming the leg to the upright state from the deeply-bent state, only the restoring force of the rubber member may be used.

Moreover, although in the above example and embodiment the humanoid robot 1 is used as the robot, the present invention is not limited to these example and/or embodiments. The robot may not be a humanoid type as long as it has the knee structure of the present invention. The present invention may be applied to a robot having only a body and legs, without having arm(s).

### DESCRIPTION OF REFERENCE CHARACTERS

- 1: Humanoid Robot
- 10: Thigh
- 11: Lower Leg
- 12: Knee Joint
- 15: Rubber Member

## Claims

1. A knee structure of a robot (10) having bendable legs, each of the legs including:
a thigh (10);
a lower leg (11) disposed below the thigh (10);
a knee joint (12) bendably connecting the thigh (10) with the lower leg (11); and
a restoring force applying member attached to the thigh (10) and the lower leg (11) so as to be across the thigh (10) and the lower leg (11), with a slack when the leg stands straight,
wherein a restoring force caused by the restoring force applying member is given to the thigh (10) and the lower leg (11), when the leg is bent deeply so that the restoring force applying member is stretched, wherein the restoring force applying member is made of an elastic body (15a),
**characterized in that** the restoring force applying member is formed in a belt-like shape and attached so as to close a gap between the thigh (10) and the lower leg (11), the gap being produced when the leg is bent.

2. The knee structure of claim 1, wherein the restoring force applying member is attached so as to pass through a position on a projecting side of the knee joint (12) when the leg is bent from a state where the leg stands straight.

3. The knee structure of claim 1 or 2, comprising a part to be compressed (16), attached to either one of the thigh (10) and the lower leg (11), at a position on the opposite side of the projecting side of the knee joint (12) when the leg is bent from a state where the leg stands straight, and configured to generate a restoring force by being pinched and compressed between the thigh (10) and the lower leg (11), when the leg reaches a bending angle more than a given angle.

## Patentansprüche

1. Eine Kniestruktur eines Roboters (10) mit biegbaren Beinen, wobei jedes der Beine Folgendes beinhaltet:
einen Oberschenkel (10);
einen Unterschenkel (11), der unterhalb des Oberschenkels (10) angeordnet ist;
ein Kniegelenk (12), das den Oberschenkel (10) mit dem Unterschenkel (11) auf biegsame Weise verbindet; und
ein Rückstellkraft aufbringendes Element, das am Oberschenkel (10) und am Unterschenkel (11) so angebracht ist, dass es sich quer zum Oberschenkel (10) und zum Unterschenkel (11) befindet, mit einem Durchhang, wenn das Bein gerade steht,
wobei eine Rückstellkraft, die durch das Rückstellkraft aufbringende Element verursacht wird, auf den Oberschenkel (10) und den Unterschenkel (11) ausgeübt wird, wenn das Bein tief gebeugt wird, sodass das Rückstellkraft aufbringende Element gedehnt wird, wobei das Rückstellkraft aufbringende Element aus einem elastischen Körper (15a) hergestellt ist,
**dadurch gekennzeichnet, dass** das Rückstellkraft aufbringende Element in einer gürtelartigen Form ausgebildet und so angebracht ist, dass es einen Spalt zwischen dem Oberschenkel (10) und dem Unterschenkel (11) schließt, wobei der Spalt entsteht, wenn das Bein gebeugt wird.

2. Die Kniestruktur nach Anspruch 1, wobei das Rückstellkraft aufbringende Element so angebracht ist, dass es durch eine Position auf einer vorstehenden Seite des Kniegelenks (12) verläuft, wenn das Bein aus einem Zustand, in dem das Bein gerade steht, gebeugt wird.

3. Die Kniestruktur nach Anspruch 1 oder 2, umfassend: ein zu komprimierendes Teil (16), das entweder am Oberschenkel (10) oder am Unterschenkel (11) an einer Position auf der gegenüberliegenden Seite der vorstehenden Seite des Kniegelenks (12) angebracht ist, wenn das Bein aus einem Zustand, in dem das Bein gerade steht, gebeugt wird, und das so konfiguriert ist, dass es eine Rückstellkraft erzeugt, indem es zwischen dem Oberschenkel (10) und dem Unterschenkel (11) eingeklemmt und komprimiert wird, wenn das Bein einen Beugewinkel erreicht, der größer ist als ein vorgegebener Winkel.

## Revendications

1. Une structure de genou d'un robot (10) présentant des jambes pliables, chacune des jambes incluant :
une cuisse (10) ;
une jambe inférieure (11) disposée au-dessus de la cuisse (10) ;
une articulation de genou (12) reliant de manière pliable la cuisse (10) à la jambe inférieure (11) ; et
un élément d'application de force de rappel fixé à la cuisse (10) et à la jambe inférieure (11) de manière à traverser la cuisse (10) et la jambe inférieure (11), avec un jeu lorsque la jambe est droite,
sachant qu'une force de rappel causée par l'élément d'application de force de rappel est transmise à la cuisse (10) et à la jambe inférieure (11), lorsque la jambe est profondément pliée de manière que l'élément d'application de force de rappel est étiré, sachant que l'élément d'application de force de rappel est constitué d'un corps élastique (15a),
**caractérisée en ce que** l'élément d'application de force de rappel se présente sous la forme d'une ceinture et est fixé de manière à fermer un espace entre la cuisse (10) et la jambe inférieure (11), l'espace étant produit lorsque la jambe est pliée.

2. La structure de genou d'après la revendication 1, sachant que l'élément d'application de force de rappel est fixé de manière à passer par une position sur un côté saillant de l'articulation de genou (12) lorsque la jambe est pliée à partir d'un état où la jambe est droite.

3. La structure de genou d'après la revendication 1 ou 2, comprenant une pièce à comprimer (16), fixée à la cuisse (10) ou à la jambe inférieure (11), à une position sur le côté opposé du côté saillant de l'articulation de genou (12) lorsque la jambe est pliée à partir d'un état où la jambe est droite, et configurée pour générer une force de rappel en étant pincée et comprimée entre la cuisse (10) et la jambe inférieure (11), lorsque la jambe atteint un angle de pliage plus grand qu'un angle donné.
